# EUROPÄISCHE PATENTANMELDUNG

(11) **EP 2 650 622 A1**
(43) Veröffentlichungstag der Anmeldung: **16.10.2013**
(21) Anmeldenummer: 13001401.2
(22) Anmeldetag: 19.03.2013
(51) Int. Cl.: F25B 25/00, F25B 29/00, F25B 7/00

(54) **Verfahren zur thermischen Nutzung von Fluiden und Anlage zur Behandlung von Gegenständen**

(30) Priorität: 13.04.2012 DE 102012007276
(71) Anmelder: Eisenmann AG, 71032 Böblingen (DE)
(72) Erfinder: Wagner, Andreas, D-71093 Weil im Schönbuch (DE); Uitz, Karsten, D-88239 Wangen (DE); Binder, Dietmar, D-71088 Holzgerlingen (DE)
(74) Vertreter: Heinrich, Hanjo

(57) **Zusammenfassung**

Bei einem Verfahren zur thermischen Nutzung von Fluiden wird Abwärme, die in einer Arbeitsstation (14) entsteht, über ein Primärfluid abgeführt. Dieses Primärfluid wird einer Verdampfereinheit (28) einer Wärmepumpeneinrichtung (30) zugeführt, über deren Kondensatoreinheit (36) Nutzwärme auf ein Sekundärfluid übertragen wird, oder ist ein Arbeitsfluid einer Wärmepumpeneinrichtung (30), welches in einem Arbeitskreislauf (32) durch deren Verdampfereinheit (28) geführt wird. Wenigstens ein Anteil dieses erwärmten Sekundärfluids wird dann einer Verdampfereinheit (58) einer weiteren Wärmepumpeneinrichtung (60) zugeführt und Nutzwärme wird auf ein Tertiärfluid übertragen. Thermische Energie wenigstens eines Anteils dieses erwärmten Tertiärfluids wird in einer Arbeitsstation (86) oder von einem Verbraucher genutzt. Außerdem ist eine Anlage zur Behandlung von Gegenständen angegeben.

## Beschreibung

Die Erfindung betrifft ein Verfahren zur thermischen Nutzung von Fluiden, bei welchem
a) Abwärme, die in einer Arbeitsstation entsteht, über ein Primärfluid abgeführt wird;
b) dieses Primärfluid
   ba) einer Verdampfereinheit einer Wärmepumpeneinrichtung zugeführt wird,
   oder
   bb) ein Arbeitsfluid einer Wärmepumpeneinrichtung ist, welches in einem Arbeitskreislauf durch deren Verdampfereinheit geführt wird;
   wobei
c) über eine Kondensatoreinheit der Wärmepumpeneinrichtung Nutzwärme auf ein Sekundärfluid übertragen wird.

Außerdem betrifft die Erfindung eine Anlage zur Behandlung von Gegenständen mit
a) wenigstens einer Arbeitsstation, in welcher Abwärme entsteht, die über ein Primärfluid abführbar ist;
b) einer Wärmepumpeneinrichtung, bei welcher
   ba) das Primärfluid einer Verdampfereinheit zuführbar ist,
      oder
   bb) das Primärfluid ein Arbeitsfluid ist, welches in einem Arbeitskreislauf durch eine Verdampfereinheit geführt wird,
   wobei
c) die Wärmepumpeneinrichtung eine Kondensatoreinheit umfasst, über welche Nutzwärme auf ein Sekundärfluid übertragbar ist.

Derartige Verfahren und Anlagen sind generell in der Oberflächentechnik vom Markt her bekannt und haben sich beispielsweise in der Automobilindustrie für die und bei der Oberflächenbehandlung von Fahrzeugkarosserien oder von Karosserieteilen etabliert.

Bei einer Oberflächenbehandlung durchlaufen die zu behandelnden Werkstücke, wie beispielsweise Fahrzeugkarosserien oder deren Teile, eine Vielzahl von verschiedenen Arbeitsstationen, bei denen eine bestimmte Betriebstemperatur erzeugt oder erhalten werden muss oder denen Arbeitsmittel mit einer bestimmten Betriebstemperatur zugeführt werden müssen.

In bestimmten Arbeitsstationen wird dagegen oder darüber hinaus Abwärme erzeugt, so beispielsweise bei der Luftkonditionierung für Lackierkabinen.

Diese Abwärme wird bei den Verfahren und Anlagen der eingangs genannten Art über eine Wärmepumpe genutzt, um ein Sekundärfluid auf einem höheren Temperaturniveau zu erzeugen. Dessen thermische Energie kann dann von Verbrauchern genutzt werden, wodurch die Abwärme zurück gewonnen wird, was zu einer verbesserten Energiebilanz der Oberflächenbehandlungsanlage führt.

Dabei kann das Primärfluid einerseits aus einem Kühlkreis der Arbeitsstation stammen und einer Verdampfereinheit der Wärmepumpeneinrichtung zugeführt werden, wo das Arbeitsfluid der Wärmepumpeneinrichtung durch die Aufnahme von thermischer Energie des Primärfluids verdampft wird. Das Arbeitsfluid der Wärmepumpeneinrichtung ist dabei von dem Primärfluid verschieden.

Andererseits kann das Primärfluid aber auch selbst das Arbeitsfluid der Wärmepumpeneinrichtung sein. In diesem Fall ist eine zur Wärmepumpeneinrichtung gehörende Verdampfereinheit beispielsweise Teil der Arbeitsstation; die in der Arbeitsstation entstehende Abwärme wird zum Verdampfen des Primärfluids in der Verdampfereinheit genutzt. Es können dabei auch mehrere Verdampfereinheiten in einer oder auch mehreren Arbeitsstationen vorhanden sein, wobei alle diese Verdampfereinheiten zu der Wärmepumpeneinrichtung zählen.

Die Aufgabe der vorliegenden Erfindung besteht darin, die Energiebilanz bei der thermischen Nutzung von Fluiden und die Energiebilanz einer Anlage zur Behandlung von Gegenständen nochmals zu verbessern.

Diese Aufgabe wird bei einem Verfahren der eingangs genannten Art dadurch gelöst, dass
d) wenigstens ein Anteil dieses erwärmten Sekundärfluids einer Verdampfereinheit einer weiteren Wärmepumpeneinrichtung zugeführt und Nutzwärme auf ein Tertiärfluid übertragen wird;
e) thermische Energie wenigstens eines Anteils dieses erwärmten Tertiärfluids in einer Arbeitsstation oder von einem Verbraucher genutzt wird.

Der Erfindung liegt die Erkenntnis zu Grunde, dass das Sekundärfluid als solches oder auch dann, wenn es bereits als Träger von thermischer Energie von Verbrauchern genutzt wird, als thermisches Reservoir für eine weitere Wärmepumpe dienen kann, durch welche dann ein Tertiärfluid erwärmt werden kann, das gegenüber dem Sekundärfluid auf einem nochmals höheren Temperaturniveau angesiedelt ist.

Dieses Tertiärfluid kann seinerseits wieder über eine Kondensatoreinheit der weiteren Wärmepumpeneinrichtung erwärmt werden, welche hierzu mit einem Arbeitsfluid arbeitet, welches von dem Tertiärfluid verschieden ist.

Alternativ kann dieses Tertiärfluid aber auch selbst das Arbeitsfluid der weiteren Wärmepumpeneinrichtung sein. In diesem Fall ist beispielsweise eine zur Wärmepumpeneinrichtung gehörende Kondensatoreinheit Teil der Arbeitsstation oder des Verbrauchers; die von dem Tertiärfluid aufgenommene thermische Energie wird dann über eine Kondensatoreinheit an die Arbeitsstation oder den Verbraucher abgegeben. Es können dabei auch mehrere Kondensatoreinheiten bei einer Arbeitsstation oder bei einem Verbraucher oder auch bei mehreren Arbeitstationen und/oder Verbrauchern vorhanden sein, wobei alle diese Kondensatoreinheiten zu der weiteren Wärmepumpeneinrichtung zählen.

Damit liegt dem Verfahren ein Temperaturkonzept zu Grunde, bei dem mit einem Primärfluid, einem Sekundärfluid und einem Tertiärfluid gearbeitet wird, die sich auf unterschiedlichen Temperaturniveaus befinden. Die fraglichen Nutztemperaturen und Temperaturniveaus werden nachfolgend für das Primärfluid als Tieftemperatur bzw. Tieftemperaturniveau, für das Sekundärfluid als Niedertemperatur bzw. Niedertemperaturniveau und für das Tertiärfluid als Hochtemperatur bzw. Hochtemperaturniveau, bezeichnet. Die Bezeichnungen sollen dabei grundsätzlich lediglich die Relation der Temperaturniveaus zueinander veranschaulichen und nicht als absolute Angaben verstanden werden.

Insgesamt wird eine Art Wärmepumpenkaskade eingesetzt, mit deren Hilfe die bereits durch das Sekundärfluid zurückgewonnene Wärmeenergie des Primärfluids weiter zur Erwärmung des Tertiärfluids beiträgt.

Es ist günstig, wenn thermische Energie wenigstens eines Anteils des erwärmten Sekundärfluids in einer Arbeitsstation oder von einem Verbraucher genutzt wird. Auf diese Weise wird Sekundärfluid zusätzlich als Quelle für thermische Energie für Anlagenteile genutzt. Unabhängig davon kann das Sekundärfluid auch über zusätzliche Heizeinrichtungen weiter erwärmt werden, bevor es zu der weiteren Wärmetauschereinrichtung gelangt oder von gegebenenfalls vorhandenen Arbeitsstationen oder Verbrauchern genutzt wird.

Im Hinblick auf die Anlage der eingangs genannten Art wird die oben angegebene Aufgabe mit den entsprechenden Vorteilen dadurch gelöst, dass
d) eine weitere Wärmepumpeneinheit mit einer Verdampfereinheit vorhanden ist, welcher wenigstens ein Anteil dieses erwärmten Sekundärfluid zuführbar ist, wobei Nutzwärme auf ein Tertiärfluid übertragen wird;
e) wenigstens ein Anteil dieses erwärmten Tertiärfluids wenigstens einer Arbeitsstation oder einem Verbraucher zuführbar ist, wo thermische Energie des Tertiärfluids genutzt werden kann.

Auch hier kann das Tertiärfluid über eine Kondensatoreinheit der weiteren Wärmepumpeneinrichtung erwärmt werden oder selbst das Arbeitsfluid der weiteren Wärmepumpeneinrichtung bilden. Das oben in diesem Zusammenhang zum Verfahren Erläuterte gilt sinngemäß entsprechend.

Vorteilhaft kann Abwärme genutzt werden, wenn die Arbeitsstation, in welcher Abwärme entsteht, eine Lackierkabine, eine Kühlzone oder ein Reinraum ist.

Eine besonders gute Nutzung der thermischen Energie des Tertiärfluids erfolgt in einer Arbeitsstation in Form einer Vorbehandlungszone oder eines Trockners.

Wie oben erläutert, ist es günstig, wenn wenigstens ein Anteil des erwärmten Sekundärfluids wenigstens einer Arbeitsstation oder einem Verbraucher zuführbar ist, wo thermische Energie des Sekundärfluids genutzt werden kann.

Diese thermische Energie des Sekundärfluids kann effektiv von einem Verbraucher in Form von einer Lüftungsanlage genutzt werden.

Um ein Hochfahren der Anlage, bei welchem das Tertiärfluid noch nicht auf dem benötigten Temperaturniveau liegt, oder auch die weitere Wärmepumpe im laufenden Betrieb zu unterstützen, ist es günstig, wenn das Tertiärfluid in einem Fluidkreis geführt ist, der mit einer Heizeinrichtung verbunden ist, durch welche Tertiärfluid erwärmbar ist.

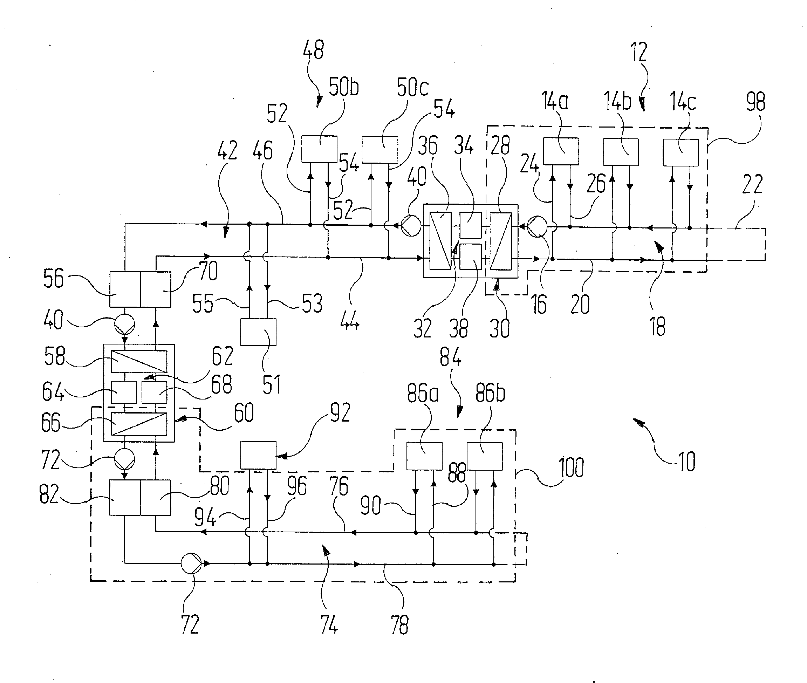

Nachstehend werden Ausführungsbeispiele der Erfindung anhand der einzigen Figur näher erläutert, welche schematisch eine Anlage 10 zur Behandlung von Gegenständen zeigt, in welcher Fluide thermisch genutzt werden.

Der Anlage 10 liegt das oben erläuterte Temperaturkonzept zu Grunde, bei welchem mit einem Primärfluid auf einem Tieftemperaturniveau, einem Sekundärfluid auf einem Niedertemperaturniveau und einem Tertiärfluid auf einem Hochtemperaturniveau gearbeitet wird. Beispielsweise können bei dem vorliegenden Ausführungsbeispiel das Tieftemperaturniveau für das Primärfluid bei Temperaturen unter 35°C, das Niedertemperaturniveau für das Sekundärfluid bei Temperaturen zwischen 35°C und 70°C und das Hochtemperaturniveau für das Tertiärfluid bei Temperaturen über 70°C liegen. Dies wird im Folgenden noch klarer verdeutlicht.

Die Anlage 10 umfasst nun eine erste Anlagenzone in Form einer Behandlungszone 12 mit mehreren Arbeitsstationen, die als Behandlungsstationen 14 ausgebildet sind. Vorliegend sind beispielhaft drei solcher Behandlungsstationen 14a, 14b, 14c gezeigt. Bei den Behandlungsstationen 14 kann es sich z.B. um Lackierkabinen, Kühlzonen oder auch um Reinräume handeln, wie sie an und für sich bekannt sind.

In den Behandlungsstationen 14 entsteht bei der entsprechenden Behandlung der Gegenstände Abwärme, welche über das oben angesprochene Primärfluid abgeführt wird. Dieses Primärfluid wird mittels einer Pumpe 16 in einem Primärkreis 18 geführt, welcher eine Kaltleitung 20 und eine Warmleitung 22 umfasst. Aus der Kaltleitung 20 gelangt Primärfluid mit einer unteren Grundtemperatur über eine Zuführleitung 24 zur Behandlungsstation 14. Dort nimmt dieses Primärfluid die Abwärme beispielsweise über ein nicht eigens gezeigtes Wärmetauschersystem auf, wobei sich das Primärfluid von seiner unteren Temperatur, beispielsweise von 6°C, auf die für das Gesamttemperaturkonzept relevante Tieftemperatur, beispielsweise auf eine Temperatur von 12°C, erwärmt.

Das erwärmte Primärfluid wird über eine Rückführleitung 26 wieder von der Behandlungsstation 14 in den Primärkreis 18 zurückgeführt, wobei die Rückführleitung 26 in dessen Warmleitung 22 mündet. Die Leitungen 24 und 26 sind nur bei der Behandlungsstation 14a mit einem Bezugszeichen versehen.

Die Begriffe "Kalt" und "Warm", wie sie hier und nachfolgend für die Begriffe Kaltleitung und Warmleitung eines Fluidkreises verwendet werden, sind als Relativangaben zu verstehen und drücken lediglich aus, dass in der Kaltleitung geführtes Fluid eine niedrigere Temperatur als das Fluid in der Warmleitung hat.

Nochmals allgemein ausgedrückt definiert die Temperatur des Primärfluids in der Warmleitung 22 des Primärkreises 18 die entsprechende Tieftemperatur oder das in Frage kommende Tieftemperaturniveau.

Die Warmleitung 22 des Primärkreises 18 führt nun zu einer Verdampfereinheit 28 einer Wärmepumpe 30, in welcher ein Arbeitsfluid in an und für sich bekannter Weise in einem Arbeitskreislauf 32 durch die Verdampfereinheit 28 und durch eine Kompressoreinheit 34, eine Kondensatoreinheit 36 und eine Drosseleinheit 38 geführt wird.

In der Verdampfereinheit 28 der Wärmepumpe 30 nimmt das Arbeitsfluid thermische Energie des Primärfluids auf. Dabei kühlt das Primärfluid von der Tieftemperatur wieder auf seine untere Temperatur ab und strömt hiernach in die Kaltleitung 20 des Primärkreises 18 ein, wodurch es wieder für die Aufnahme von Abwärme aus den Behandlungsstationen 14 zur Verfügung steht.

In der Kondensatoreinheit 34 wird thermische Energie von dem Arbeitsfluid der Wärmepumpe 30 nun als Nutzwärme auf das bereits erwähnte Sekundärfluid übertragen, welches mittels einer oder mehrerer Pumpen 40 in einem Sekundärkreis 42 geführt wird, der seinerseits eine Kaltleitung und eine Warmleitung umfasst; diese tragen die Bezugszeichen 44 bzw. 46. Sekundärfluid mit einer unteren Temperatur wird über die Kaltleitung 44 des Sekundärkreises 42 zur Kondensatoreinheit 34 geführt, wird dort auf die Niedertemperatur erwärmt und strömt dann in die Warmleitung 46 ein.

Beispielsweise hat das Sekundärfluid beim vorliegenden Ausführungsbeispiel in der Kaltleitung 44 eine Temperatur von etwa 43°C und in der Warmleitung 46 eine Niedertemperatur von etwa 48°C. Wieder allgemein gesprochen ist die Niedertemperatur oder das in Frage kommende Niedertemperaturniveau durch die Temperatur des Sekundärfluids in der Warmleitung 46 des Sekundärkreises 42 definiert.

Die thermische Energie des erwärmten Sekundärfluids auf dem Niedertemperaturniveau kann in einer zweiten Anlagenzone 48 genutzt werden, in welcher Verbraucher 50 vorhanden sind, wobei beispielhaft eine Lüftungsanlage 50a und ein Rückkühler 50b veranschaulicht sind. Verbraucher können auch in Form von Arbeitsstationen vorhanden sein, in denen Gegenstände behandelt werden.

Aus der Warmleitung 46 des Sekundärkreises 42 wird z.B. Sekundärfluid mit Niedertemperatur über eine Zuführleitung 52 zu der Lüftungsanlage 50a geleitet. Dort wird Wärme dieses Sekundärfluids beispielsweise über ein nicht eigens gezeigtes Wärmetauschersystem an die Lüftungsanlage 50a abgegeben, wobei das Sekundärfluid auf sein unteres Temperaturniveau abkühlt. Das so abgekühlte Sekundärfluid wird über eine Rückführleitung 54 wieder von der Lüftungsanlage 50a in den Sekundärkreis 42 zurückgeführt, wozu die Rückführleitung 54 in dessen Warmleitung 46 mündet.

Wenn die Anlage 10 heruntergefahren wird, wird das Sekundärfluid zu dem Rückkühler 50b, beispielsweise einem Glykol-Rückkühler, geführt, wo dem Sekundärfluid Wärme entzogen wird, die so aus dem Sekundärkreislauf 42 abgeführt werden kann.

Das Sekundärfluid in dem Sekundärkreis 42 kann zusätzlich mittels einer Heizeinrichtung 51 erwärmt werden, wozu Sekundärfluid über eine Zuführleitung 53 aus der Warmleitung 46 zur Heizeinrichtung 51 und von dort über eine Rückführleitung 53 von der Heizeinrichtung 51 wieder in die Warmleitung 46 des Sekundärkreises 42 einströmen kann. Die Heizeinrichtung 51 dient beispielsweise als Stützheizung zum Anfahren der Anlage 10, um das Sekundärfluid rasch auf das Niedertemperaturniveau zu erhitzen. Eine solche Heizeinrichtung 51 kann beispielsweise als Heizkessel-Heizung oder ebenfalls wieder als Wärmetauscher ausgebildet sein, wobei mit letzterem wieder Wärme aus anderen Prozessen rückgewonnen werden kann. Gegebenenfalls kann auch sowohl eine Heizkessel-Heizung als auch ein solcher Wärmetauscher vorhanden sein.

Die Warmleitung 46 des Sekundärkreises 42 führt nun den Anteil des Sekundärfluids, der nicht von den Verbrauchern 50 genutzt wird, über einen Fluidspeicher 56 für Sekundärfluid auf dem oberen Temperaturniveau zu einer Verdampfereinheit 58 einer zweiten Wärmepumpe 60, in welcher ein Arbeitsfluid in wieder an und für sich bekannter Weise in einem Arbeitskreislauf 62 durch die Verdampfereinheit 58 sowie durch eine Kompressoreinheit 64, eine Kondensatoreinheit 66 und eine Drosseleinheit 68 geführt wird.

In der Verdampfereinheit 58 der zweiten Wärmepumpe 60 nimmt deren Arbeitsfluid thermische Energie des Sekundärfluids auf. Dabei kühlt das Sekundärfluid wieder von der Niedertemperatur auf sein unteres Temperaturniveau ab und strömt hiernach in die Kaltleitung 44 des Sekundärkreises 42 ein, über welche es wieder zur Kondensatoreinheit 36 der ersten Wärmepumpe 30 gelangt, wo es auf die Niedertemperatur erwärmt wird.

In der Kaltleitung 44 des Sekundärkreises 42 ist außerdem ein Fluidspeicher 70 für Sekundärfluid auf dem unteren Temperaturniveau angeordnet. Durch die Fluidspeicher 56 und 70 in der Warmleitung 46 und der Kaltleitung 44 des Sekundärkreises 42 kann der Betrieb der ersten Wärmepumpe 30 von dem Bedarf an Sekundärfluid auf Niedertemperaturniveau durch die Verbraucher 50 entkoppelt werden. Hierdurch kann der Betrieb und die Betriebsdauer der ersten Wärmepumpe 30 optimiert werden. Bei einer Abwandlung können die Fluidspeicher 56 und 70 auch in an und für sich bekannter Weise als einheitlicher Schichtspeicher ausgebildet sein.

In der Kondensatoreinheit 66 der zweiten Wärmepumpe 60 wird nun thermische Energie von deren Arbeitsfluid als Nutzwärme auf das oben bereits genannte Tertiärfluid übertragen, welches mittels einer oder mehrerer Pumpen 72 in einem Tertiärkreis 74 mit einer Kaltleitung 76 und einer Warmleitung 78 geführt wird. Kühleres Tertiärfluid auf einem unteren Temperaturniveau wird über die Kaltleitung 76 des Tertiärkreises 74 zur Kondensatoreinheit 66 der zweiten Wärmepumpe 60 geführt, wird dort erwärmt und strömt dann mit einer Hochtemperatur in die Warmleitung 78 des Tertiärkreises 74 ein.

Zum Beispiel hat das Tertiärfluid beim vorliegenden Ausführungsbeispiel in der Kaltleitung 76 eine untere Temperatur von etwa 105°C und in der Warmleitung 78 eine Hochtemperatur von etwa 110°C. Wieder allgemein gesprochen ist die Hochtemperatur oder das in Frage kommende Hochtemperaturniveau durch die Temperatur des Tertiärfluids in der Warmleitung 78 des Tertiärkreises 74 definiert.

In der Kaltleitung 76 des Tertiärkreises 74 ist wieder ein Fluidspeicher 80 für Tertiärfluid auf dem unteren Temperaturniveau angeordnet. In entsprechender Weise ist in der Warmleitung 78 des Tertiärkreises 74 ein Fluidspeicher 82 für Tertiärfluid auf Hochtemperaturniveau angeordnet. Durch die Fluidspeicher 80 und 82 kann wieder der Betrieb der zweiten Wärmepumpe 60 von dem noch nachfolgend erläuterten Bedarf an Tertiärfluid auf Hochtemperaturniveau entkoppelt werden, so dass auch der Betrieb und die Betriebsdauer der zweiten Wärmepumpe 60 optimiert werden kann. Auch die Fluidspeicher 80 und 82 können bei einer Abwandlung in an und für sich bekannter Weise als einheitlicher Schichtspeicher ausgebildet sein.

Die thermische Energie des erwärmten Tertiärfluids auf Hochtemperaturniveau kann nun in einer dritten Anlagenzone 84 genutzt werden, in welcher Arbeitsstationen 86 vorhanden sind, welche bei Temperaturen im Bereich des Hochtemperaturniveaus des Tertiärfluid betrieben werden und/oder welchen Arbeitsmittel wie beispielsweise konditionierte Luft zugeführt werden, die mittels des Tertiärfluids erwärmt werden. In der Figur sind beispielhaft zwei derartige Arbeitsstationen 86a, 86b gezeigt, die z.B. in Form einer Vorbehandlungszone oder eines Trockners oder dergleichen vorhanden sein können.

Aus der Warmleitung 78 des Tertiärkreises 74 wird hierzu Tertiärfluid auf dem oberen Temperaturniveau über eine Zuführleitung 88 zu der Arbeitsstation 86 geleitet. Dort wird Wärme dieses Tertiärfluids beispielsweise über ein nicht eigens gezeigtes Wärmetauschersystem in der Arbeitsstation 86 abgegeben, wobei das Tertiärfluid auf sein unteres Temperaturniveau abkühlt. Das so abgekühlte Tertiärfluid wird über eine Rückführleitung 90 wieder aus der Arbeitsstation 86 in den Tertiärkreis 74 zurückgeführt, wozu die Rückführleitung 90 in dessen Warmleitung 78 mündet. Die Leitungen 88 und 90 sind nur bei der Arbeitsstation 86a mit einem Bezugszeichen versehen.

Das Tertiärfluid in dem Tertiärkreis 74 kann zusätzlich mittels einer Heizeinrichtung 92 erwärmt werden, wozu Tertiärfluid über eine Zuführleitung 94 aus der Warmleitung 78 zur Heizeinrichtung 92 und von dort über eine Rückführleitung 96 von der Stützheizeinrichtung 92 wieder in die Warmleitung 78 des Tertiärkreises 74 einströmen kann. Die Heizeinrichtung 92 dient beispielsweise als Stützheizung zum Anfahren der Anlage 10, um das Tertiärfluid rasch auf das obere Temperaturniveau zu erhitzen, welches für den Betrieb der Arbeitsstationen 86 notwendig ist. Eine solche Heizeinrichtung 92 kann beispielsweise als Heizkessel-Heizung oder ebenfalls wieder als Wärmetauscher ausgebildet sein, wobei mit letzterem wieder Wärme aus anderen Prozessen rückgewonnen werden kann. Gegebenenfalls kann auch sowohl eine Heizkessel-Heizung als auch ein solcher Wärmetauscher vorhanden sein.

Auch bei dem Tertiärkreislauf 74 kann ein Rückkühler vorgesehen sein, wie es oben im Zusammenhang mit dem Sekundärkreislauf 42 erläutert wurde, welcher hier jedoch nicht eigens gezeigt ist. Wenn die Anlage 10 heruntergefahren wird, wird das Tertiärfluid zu diesem Rückkühler geführt, wo dem Tertiärfluid Wärme entzogen wird, die so aus dem Tertiärkreislauf 74 abgeführt werden kann. Dieser Rückkühler kann ebenfalls beispielsweise als Glykol-Rückkühler ausgebildet sein.

Dem oben erläuterten Temperaturkonzept folgend arbeitet die erste Wärmepumpe 30 somit als Niedertemperatur-Wärmepumpe, mit welcher Wärmeenergie, die auf dem Tieftemperaturniveau des Primärfluids gewonnen wurde, genutzt wird, um Sekundärfluid auf das Niedertemperaturniveau zu erwärmen. Die zweite Wärmepumpe 60 arbeitet dementsprechend als Hochtemperatur-Wärmepumpe, mit welcher Wärmeenergie, die auf dem Niedertemperaturniveau des Sekundärfluids gewonnen wurde, genutzt wird, um Tertiärfluid auf das Hochtemperaturniveau zu erwärmen.

Bei einer nicht eigens gezeigten Abwandlung können das Primärfluid und/oder das Sekundärfluid und/oder das Tertiärfluid auch gemeinsam von einer Arbeitsstation oder einem oder mehreren Verbrauchern oder einem Verbraucherverbund genutzt werden, beispielsweise wenn eine Arbeitsstation verschiedene Teile umfasst, die auf unterschiedlichen Temperaturniveaus arbeiten.

Wie eingangs erläutert wurde, kann das Primärfluid das in dem Arbeitskreislauf 32 geführte Arbeitsfluid der ersten Wärmepumpe 30 sein. Diese Variante ist in der Figur anhand einer durch gestrichelte Linien gezeigten Arbeitsstation 98 veranschaulicht.

Dementsprechend ist die Verdampfereinheit 28 der ersten Wärmepumpe 30 ein Teil der Arbeitsstation 98, bei welcher die Bezugsziffer 18 einen Kühlkreis mit einem Kühlfluid bezeichnet. Die Einheiten 14a, 14b und 14c bilden beispielsweise Wärmetauscher, über welche in der Arbeitsstation 98 entstehende Abwärme an den Kühlkreis 18 übergeben wird.

Die von dem im Kühlkreis 18 aufgenommene Wärme wird dann in der Verdampfereinheit 28 genutzt, um das Primärfluid in dem Arbeitskreislauf 32 der ersten Wärmepumpe 30 zu verdampfen. Wie eingangs ebenfalls erläutert wurde, kann das Tertiärfluid alternativ oder ergänzend das in dem Arbeitskreislauf 62 geführte Arbeitsfluid der zweiten Wärmepumpe 60 sein. Diese Alternative ist in der Figur anhand einer ebenfalls durch gestrichelte Linien gezeigten Arbeitsstation 100 veranschaulicht.

Dort ist die Kondensatoreinheit 66 der zweiten Wärmepumpe 60 dann ein Teil der Arbeitsstation 100, welche die Nutzwärme des Tertiärfluids aufnimmt, und die Bezugsziffer 74 bezeichnet einen Fluidkreis dieser Arbeitsstation 100. Die Einheiten 86a und 86b bilden ihrerseits beispielsweise Wärmetauscher oder direkte Abnehmer, über welche oder auf welche Wärme von dem Fluidkreis 74 übertragen werden kann.

Wenn die Arbeitsstation 100 beispielsweise ein Trockner ist, kann der Fluidkreis 74 durch einen Luftkreislauf gebildet sein. Erwärmte Luft wird dann zum Trocknen auf Gegenstände abgegeben, wobei sie abkühlt, und im Kreislauf wieder zurück zur Kondensatoreinheit 66 geführt wird, wo sie durch das Tertiärfluid wieder erwärmt wird.

## Patentansprüche

1. Verfahren zur thermischen Nutzung von Fluiden, bei welchem
a) Abwärme, die in einer Arbeitsstation (14; 98) entsteht, über ein Primärfluid abgeführt wird;
b) dieses Primärfluid
ba) einer Verdampfereinheit (28) einer Wärmepumpeneinrichtung (30) zugeführt wird,
oder
bb) ein Arbeitsfluid einer Wärmepumpeneinrichtung (30) ist, welches in einem Arbeitskreislauf (32) durch deren Verdampfereinheit (28) geführt wird;
wobei
c) über eine Kondensatoreinheit (36) der Wärmepumpeneinrichtung (30) Nutzwärme auf ein Sekundärfluid übertragen wird,
**dadurch gekennzeichnet, dass**
d) wenigstens ein Anteil dieses erwärmten Sekundärfluids einer Verdampfereinheit (58) einer weiteren Wärmepumpeneinrichtung (60) zugeführt und Nutzwärme auf ein Tertiärfluid übertragen wird;
e) thermische Energie wenigstens eines Anteils dieses erwärmten Tertiärfluids in einer Arbeitsstation (86; 100) oder von einem Verbraucher genutzt wird.

2. Verfahren nach Anspruch 1, **dadurch gekennzeichnet, dass** thermische Energie wenigstens eines Anteils des erwärmten Sekundärfluids in einer Arbeitstation oder von einem Verbraucher (50) genutzt wird.

3. Anlage zur Behandlung von Gegenständen mit
a) wenigstens einer Arbeitsstation (14; 98), in welcher Abwärme entsteht, die über ein Primärfluid abführbar ist;
b) einer Wärmepumpeneinrichtung (30), bei welcher
ba) das Primärfluid einer Verdampfereinheit (28) zuführbar ist,
oder
bb) das Primärfluid ein Arbeitsfluid ist, welches in einem Arbeitskreislauf (32) durch eine Verdampfereinheit (28) geführt wird,
wobei
c) die Wärmepumpeneinrichtung (30) eine Kondensatoreinheit (36) umfasst, über welche Nutzwärme auf ein Sekundärfluid übertragbar ist;
**dadurch gekennzeichnet, dass**
d) eine weitere Wärmepumpeneinrichtung (60) mit einer Verdampfereinheit (58) vorhanden ist, welcher wenigstens ein Anteil dieses erwärmten Sekundärfluid zuführbar ist, wobei Nutzwärme auf ein Tertiärfluid übertragen wird;
e) wenigstens ein Anteil dieses erwärmten Tertiärfluids wenigstens einer Arbeitsstation (86; 100) oder einem Verbraucher zuführbar ist, wo thermische Energie des Tertiärfluids genutzt werden kann.

4. Anlage nach Anspruch 3, **dadurch gekennzeichnet, dass** die Arbeitstation (14; 98), in welcher Abwärme entsteht, eine Lackierkabine, eine Kühlzone oder ein Reinraum ist.

5. Anlage nach Anspruch 3 oder 4, **dadurch gekennzeichnet**, thermische Energie des Tertiärfluids in einer Arbeitsstation (86; 100) in Form einer Vorbehandlungszone oder eines Trockners genutzt wird.

6. Anlage nach einem der Ansprüche 3 bis 5, **dadurch gekennzeichnet, dass** wenigstens ein Anteil des erwärmten Sekundärfluids wenigstens einer Arbeitstation oder einem Verbraucher (50) zuführbar ist, wo thermische Energie des Sekundärfluids genutzt werden kann.

7. Anlage nach Anspruch 6, **dadurch gekennzeichnet, dass** thermische Energie des Sekundärfluids von einem Verbraucher (50) in Form einer Lüftungsanlage (50b) genutzt wird.

8. Anlage nach einem der Ansprüche 3 bis 7, **dadurch gekennzeichnet, dass** das Tertiärfluid in einem Fluidkreis (74) geführt ist, der mit einer Heizeinrichtung (92) verbunden ist, durch welche Tertiärfluid erwärmbar ist.
